# FASCICULE DE BREVET EUROPEEN

(11) **EP 0 690 952 B1**
(45) Date de publication et mention de la délivrance du brevet: **09.04.1997**
(21) Numéro de dépôt: 95907056.6
(22) Date de dépôt: 23.01.1995
(51) Int. Cl.: E06B 3/964, E05D 1/04, F16B 12/44, F16B 7/00

(54) **DISPOSITIF DE LIAISON DES EXTREMITES ADJACENTES DE DEUX TRONCONS DE POUTRE CREUSE**
VERBINDUNGSVORRICHTUNG FÜR DIE BENACHBARTEN ENDEN ZWEIER HOHLTRÄGERSTÜCKE
DEVICE FOR END-TO-END COUPLING OF TWO HOLLOW BEAM SECTIONS

(30) Priorité: 25.01.1994 FR 9400759
(43) Date de publication de la demande: 10.01.1996
(73) Titulaire: COUTIER INDUSTRIE, F-57100 Thionville (FR); ELECTRICITE DE FRANCE, 75016 Paris (FR)
(72) Inventeur: COUTIER, Charles, F-57100 Thionville (FR); BONADA, Thierry, F-69680 Chassieu (FR)
(74) Mandataire: Robert, Jean-Pierre
(86) Numéro de dépôt international: FR9500067
(87) Numéro de publication internationale: WO9520093

(56) Documents cités:
- EP-A- 0 064 001
- FR-A- 2 327 369
- FR-A- 2 562 143
- US-A- 3 521 421

## Description

La présente invention concerne un dispositif de liaison par leurs extrémités de deux tronçons de poutre creuse autorisant de nombreuses positions relatives des tronçons ainsi reliés, constitué par un insert comportant deux pièces.

Un tel dispositif est connu du brevet EP-A-0 064 001.

Dans de nombreux domaines, il est nécessaire de relier bout à bout des éléments de structure tels que des montants, des côtés de cadres, des mains courantes, ...., ces éléments de structure étant en général constitués par des profilés ou des poutres creuses.

L'un des moyens largement utilisés pour réaliser cette liaison consiste en un insert qui est logé dans le volume creux de chaque extrémité des éléments à relier afin d'assurer la continuité mécanique entre eux, l'insert étant fixé à chaque élément. Cet insert peut être rectiligne auquel cas les éléments sont fixés en alignement l'un de l'autre ou peut être angulaire et en particulier à angle droit auquel cas, par le biais d'une coupe d'onglet, les éléments sont reliés bout à bout en faisant un angle entre eux.

On assiste aujourd'hui au développement de plus en plus important de la réalisation in situ, c'est-à-dire sur un chantier, de structures à partir d'éléments standards qu'il suffit simplement d'assembler sur le site avec, au besoin, quelques opérations de découpe simple. Le développement de ce mode opératoire tient pour une part au développement de nouveaux matériaux tels que des matériaux composites à base de résine renforcée dont la découpe ou l'usinage simple est facilement réalisable sur chantier et dont l'assemblage autorise, avec d'excellentes qualités mécaniques, l'emploi de colle.

La présente invention entend proposer un dispositif d'assemblage destiné à ces montages in situ, bien que son utilisation ne soit pas limitée à ce cas particulier, dont la conception permet d'en faire un moyen relativement universel c'est-à-dire adapté à coopérer à la liaison de deux éléments en forme de poutre creuse, quelle que soit, pratiquement, l'orientation relative finale des deux éléments à assembler.

A cet effet l'invention a donc pour objet un dispositif de liaison des extrémités adjacentes de deux tronçons de poutre creuse autorisant de nombreuses positions relatives des tronçons qui est constitué par un insert comportant deux pièces en forme de quart de disque articulées l'une à l'autre le long d'un de leurs côtés, leur autre côté étant continu dans un plan perpendiculaire à l'axe d'articulation, la section radiale de l'insert étant sensiblement identique à la section intérieure évidée de chaque tronçon.

Grâce au dispositif de l'invention, lorsque les deux quarts de disques sont coplanaires, on peut réaliser l'aboutement de deux tronçons depuis une position dans laquelle ils sont alignés jusqu'une position dans laquelle ils sont perpendiculaires. De plus, grâce à l'articulation centrale des deux parties de l'insert, il est possible d'orienter le plan de l'un des tronçons et de l'incliner par rapport au plan de l'autre. On réalise ainsi une sorte d'articulation à rotule entre les deux tronçons dont l'amplitude bien entendu est limitée, l'orientation finale de chacun des deux tronçons étant déterminée par le plan de leur tronçonnage d'extrémité (perpendiculaire à leur axe, en coupe d'onglet, en coupe d'onglet et en biseau,....).

Dans un mode particulier de réalisation de l'invention, les pièces de l'insert sont identiques, chacune d'elles étant en au moins deux parties séparées qui sont liées l'une à l'autre au moment de la liaison par articulation des deux pièces. Plus précisément, l'une des parties de chaque pièce comporte, le long de son côté d'articulation à l'autre pièce, au moins deux pattes en forme de crochets ouverts du côté d'une face, distantes l'une de l'autre le long de ce côté, et comportant dans la face susdite au moins un logement en regard des intervalles séparant ces deux pattes dans lequel peut être disposée l'autre partie équipée également d'une patte en forme de crochet et dont l'ouverture est tournée à l'opposé de cette face. L'insert comporte ainsi quatre éléments qu'il est très facile d'assembler, notamment par collage, et dont la fabrication par moulage est extrêmement simple sans qu'il soit nécessaire de mettre en oeuvre des moules complexes à noyaux pour réserver des passages d'un axe d'articulation ou de mettre en oeuvre des opérations de reprise d'usinage qui sont toujours, dans le domaine des matériaux composites, des sources d'affaiblissement mécanique des pièces. La constitution en quatre pièces de cet insert est particulièrement adaptée à sa réalisation en matériau plastique renforcé.

D'autres caractéristiques et avantages de l'invention ressortiront de la description donnée ci-après à titre d'exemple de deux modes de réalisation.

Il sera fait référence aux dessins annexés dans lesquels :
- la figure 1 est une vue schématique générale du dispositif selon l'invention,
- la figure 2 est une vue en perspective d'un mode préféré de réalisation d'un demi-insert selon l'invention,
- les figures 3 à 6 sont des coupes partielles au niveau de leur articulation des différentes parties formant l'insert selon l'invention lorsqu'elles sont coplanaires pour les figures 3 et 4 et lorsqu'elles forment un angle droit pour les figures 5 et 6,
- la figure 7 illustre par une vue en coupe la liaison de deux tronçons de poutre au moyen d'un insert selon l'invention dans lequel les deux pièces articulées sont coplanaires,
- la figure 8 illustre par une même vue en coupe la liaison de deux poutres avec l'insert de l'invention dans lequel les deux pièces qui le constituent sont perpendiculaires,
- les figures 9 et 10 sont deux vues en coupe de l'insert selon l'invention selon les lignes IX-IX et X-X de la figure 7.

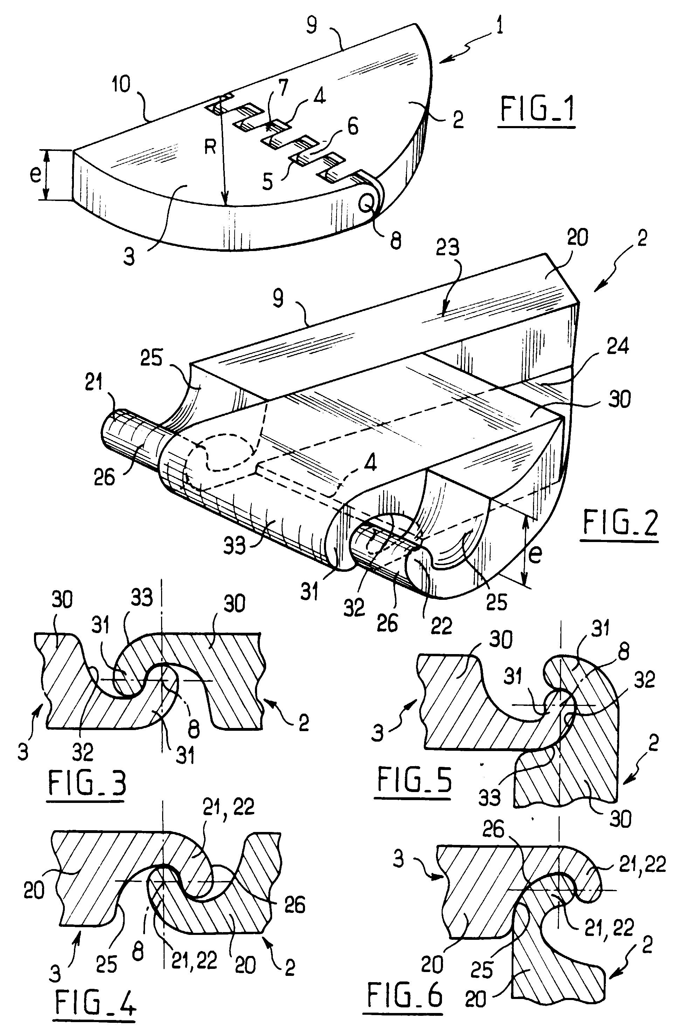

La figure 1 est une représentation schématique du dispositif selon l'invention pour en illustrer les principales caractéristiques. L'insert 1 représenté comporte deux pièces 2 et 3 en forme générale de quart de disque de rayon R et d'épaisseur e. Sur l'un de leurs côtés 4, 5, ces quarts de disques 2 et 3 sont équipés de dents 6 et 7 qui, lorsqu'elles sont rapprochées, s'interpénêtrent et sont traversées par un axe d'articulation 8. L'axe 8 est radial et est perpendiculaire aux autres côtés 9, 10 des quarts de disques 2 et 3. Ainsi, lorsque les deux quarts de disques pivotent l'un par rapport à l'autre, les côtés 9, 10 évoluent dans un même plan.

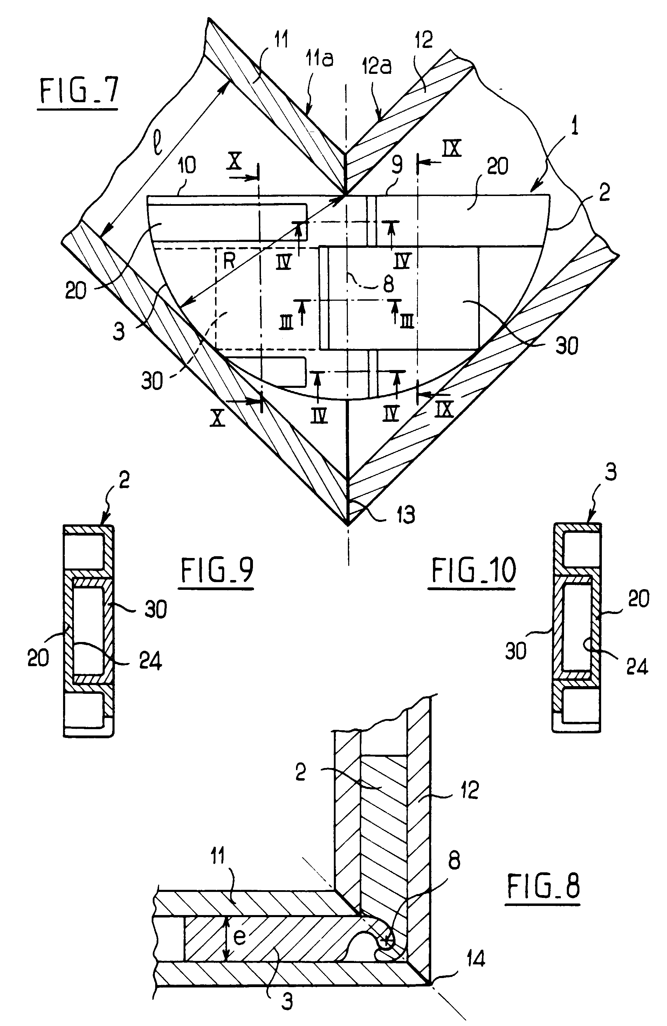

Si on se reporte à la figure 7 à laquelle on a représenté deux tronçons 11 et 12 de poutre creuse dont la section est rectangulaire et qui sont ici représentés en coupe selon un plan médian parallèle à leur face et perpendiculaire à leur chants 11a, 12a, ces tronçons étant aboutés de manière à former un angle de cadre dans un plan parallèle au plan de coupe, l'insert selon l'invention est disposé dans le volume intérieur de ces tronçons, à plat, c'est-à-dire que ses deux parties 2 et 3 sont dans un même plan, l'axe 8 étant sensiblement contenu dans le plan de coupe d'onglet 13 de chacun des tronçons 11 et 12. Le rayon R de l'insert est sensiblement égal à la largeur L de l'évidement intérieur de chacun des tronçons 11 et 12, l'épaisseur de l'insert e étant bien entendu sensiblement égale à l'épaisseur de cet évidement. La fixation de cet assemblage est réalisée par collage, d'une part des tronçons 11 et 12 au niveau de leur plan de joint 13 et d'autre part des pièces de l'insert 2 et 3 à l'intérieur des tronçons 11 et 12, voire entre les dents 6 et 7 de manière à immobiliser les pièces articulées 2 et 3 pour former un bloc rigide.

La figure 2 illustre un mode de réalisation particulier de l'insert 1 selon l'invention, et plus précisément d'un demi-insert, l'autre étant strictement identique comme expliqué ci-dessous. On supposera que la figure 2 est la représentation de la pièce 2 de l'insert selon l'invention. Cette pièce comporte une première partie 20 d'épaisseur e limitée par le côté 9 et par un arc de cercle, le côté 4 étant porteur de deux pattes 21, 22 en forme de crochet dont l'ouverture est tournée vers la face supérieure 23 de cette partie 20. Les deux pattes 21 et 22 sont distantes l'une de l'autre le long de ce côté 4 et, en regard de l'intervalle qui les sépare, la partie 20 comporte un évidement 24 qui forme logement pour une seconde partie 30 dont l'épaisseur vient combler au moins partiellement l'évidement. Cette seconde partie 30 comporte également une patte 31 en forme de crochet qui, lorsque la partie 30 est correctement placée à l'intérieur du logement 24, est tournée à l'opposé de la face 23 de la partie 20. On notera que le profil 25 de la surface intérieure des crochets 21, 22 et le profil de la surface intérieure des crochets 31 est identique au profil de leurs surfaces extérieure respectivement 26 et 33.

La deuxième pièce 3 est constituée par deux parties identiques à celles 20 et 30 représentées à la figure 2, et l'articulation de ces deux pièces consiste à mettre en prise chacune des pattes en crochet qu'elle comporte comme illustré à la figure 7. On comprend, au vu de cette figure, que la pièce 3, pour coopérer avec la pièce 2, doit être placée dans une position obtenue en ayant fait tourner la pièce 2 de 180° autour de l'axe 8 de la figure 7.

Les figures 3 et 4 sont deux vues en coupe partielle suivant les lignes III-III et IV-IV de la figure 7 illustrant, lorsque les deux pièces sont articulées l'une à l'autre, la coopération des pattes 21, 22 et 31 de chacune d'elles.

Lorsque l'on fait pivoter la pièce 2 par rapport à la pièce 3 pour la placer perpendiculairement à celle-ci et vers le bas, on obtient une disposition relative des pattes 21, 22 et 31 illustrée par les figures 5 et 6. On constate sur ces figures que les profils conjugués 25, 26, 32, 33 viennent au contact l'un de l'autre et constituent des butées d'arrêt du pivotement relatif des pièces. La rotation s'opère autour de l'axe de l'extrémité des crochets 21 et 22 de la pièce 2 et 31 de la pièce 3, axes alignés lorsque les pièces 2 et 3 sont assemblées et qui matérialisent l'axe 8. On notera qu'une rotation de la pièce 2 par rapport à la pièce 3 en rabattement vers le haut est impossible pour ce mode de réalisation, ce qui n'est pas gênant. Il suffit en effet de retourner l'insert pour obtenir ce résultat.

La figure 8 illustre l'assemblage de deux montants 11 et 12 représentés en coupe par un plan parallèle à leur chants 11a, 12a. Ces deux montants sont préparés avec une coupe d'onglet déterminant un plan de jonction 14, de sorte que les montants sont perpendiculaires entre eux et reliés par l'insert selon l'invention dans lequel la pièce 2 est placée perpendiculairement à la pièce 3 autour de l'articulation 8. La fixation de l'assemblage est réalisée par collage d'une part des montants entre eux au niveau du plan 14 et d'autre part de l'insert à l'intérieur des poutres, voire des pièces 2 et 3 entre elles à l'endroit de leurs crochets en prise.

Les figures 9 et 10 sont des vues en coupe transversale selon les lignes IX-IX et X-X de la figure 7 des deux pièces de l'insert avec, chacune, ses deux parties 20 et 30. Chacune des pièces 20 et 30 formant l'insert est réalisée en paroi mince conformée en caisson pour assurer les stabilité et résistance mécaniques nécessaires et leur assemblage peut être réalisé soit en usine par collage des deux pièces 20 et 30 entre elles après avoir mis en prise les pattes à crochet des deux pièces 2 et 3, soit sur site préalablement à l'assemblage de deux montants ou en même temps que ceux-ci.

L'invention n'est pas limitée aux modes de réalisation qui viennent d'être décrits. En particulier, chacune des pièces 2 et 3 formant l'insert peut être constituée d'une pièce 20 comportant plusieurs pattes telles que 21 et 22 et par plusieurs pièces telles que 30 disposées dans des logements tels que 24 qui seraient en nombre égal à celui des intervalles séparant les pattes telles que 21 et 22.

## Revendications

1. Dispositif de liaison des extrémités adjacentes de deux tronçons (11, 12) de poutres creuses autorisant de nombreuses positions relatives des tronçons, constitué par un insert comportant deux pièces (2, 3) caractérisé en ce que les pièces sont en forme de quart de disque, articulées l'une à l'autre le long d'un de leurs côtés (4,5), leur autre côté (9,10) étant contenu dans un plan perpendiculaire à l'axe (8) d'articulation, la section radiale (R, e) de l'insert étant sensiblement identique à la section intérieure (L, e) évidée de chaque tronçon (11, 12).

2. Dispositif selon la revendication 1, caractérisé en ce que les pièces (2, 3) sont identiques, chacune d'elles étant en au moins deux parties (20, 30) séparées, qui sont liées l'une à l'autre au moment de la liaison par articulation des deux pièces.

3. Dispositif selon la revendication 2, caractérisé en ce que l'une (20) des parties de chaque pièce (2, 3) comporte le long de son côté (4) d'articulation à l'autre pièce au moins deux pattes (21, 22) en forme de crochet ouvert du côté d'une face (23), distantes l'une de l'autre le long de ce côté (4) et comportant, en regard des intervalles séparant ces pattes (21, 22) dans la face (23) susdite, au moins un logement pour l'autre partie (30) équipée également d'une patte (31) en forme de crochet dont l'ouverture est tournée à l'opposé de cette face (23).

4. Dispositif selon la revendication 3, caractérisé en ce que les ouvertures des pattes (21, 22, 31) d'une pièce sont conformées pour accueillir les extrémités des crochets de l'autre pièce et présentent un profil intérieur (25, 32) identique à celui de leurs surfaces extérieures (26, 33).

5. Dispositif selon l'une des revendications 2 à 4, caractérisé en ce que les parties (20, 30) d'une pièce (2) sont rendues solidaires par collage après mise en prise de ces crochets avec les crochets de l'autre pièce (3).

## Patentansprüche

1. Vorrichtung zur Verbindung der benachbarten Enden von zwei Hohlträgerabschnitten (11, 12), die zahlreiche relative Positionen der Abschnitte erlaubt und die durch einen zwei Stücke (2, 3) umfassenden Einsatz gebildet ist, dadurch gekennzeichnet, daß die Stücke die Form von Viertelscheiben aufweisen, die entlang einer ihrer Seiten (4, 5) gelenkig miteinander verbunden sind, wobei ihre andere Seite (9, 10) in einer zur Gelenkachse (8) senkrechten Ebene enthalten ist und wobei der radiale Querschnitt (R, e) des Einsatzes im wesentlichen identisch mit dem hohlen inneren Querschnitt (L, e) eines jeden Abschnitts (11, 12) ist.

2. Vorrichtung nach Anspruch 1, dadurch gekennzeichnet, daß die Stücke (2, 3) identisch sind und jeweils aus mindestens zwei separaten Teilen (20, 30) bestehen, die bei der durch Aneinanderlenken der beiden Stücke erfolgenden Verbindung miteinander verbunden werden.

3. Vorrichtung nach Anspruch 2, dadurch gekennzeichnet, daß der eine, (20), der Teile eines jeden Stückes (2, 3) entlang seiner für die Anlenkung an dem anderen Stück vorgesehenen Seite (4) zumindest zwei Ansätze (21, 22) in Form eines Hakens hat, der zu einer Fläche (23) hin offen ist, wobei die Ansätze entlang dieser Seite (4) voneinander entfernt sind, und gegenüber diese Ansätze (21, 22) trennenden Zwischenräumen in der vorgenannten Fläche (23) zumindest eine Aufnahme für den anderen Teil (30) hat, der ebenfalls einen Ansatz (31) in Form eines Hakens besitzt, dessen Öffnung in die dieser Fläche (23) entgegengesetzte Richtung gekehrt ist.

4. Vorrichtung nach Anspruch 3, dadurch gekennzeichnet, daß die Öffnungen der Ansätze (21, 22, 31) eines Stückes derart geformt sind, daß sie die Enden der Haken eines anderen Stükkes aufnehmen und ein mit dem Profil ihrer Außenflächen (26, 33) identisches inneres Profil (25, 32) aufweisen.

5. Vorrichtung nach einem der Ansprüche 2 bis 4, dadurch gekennzeichnet, daß die Teile (20, 30) eines Stückes durch Kleben fest miteinander verbunden werden, nachdem diese Haken mit den Haken des anderen Stückes (3) in Eingriff gebracht wurden.

## Claims

1. A device for connecting together the adjacent ends of two lengths (11, 12) of hollow beam and enabling the lengths to take up numerous positions relative to each other, constituted by an insert comprising two parts (2, 3), characterized in that said parts are in the form of quarters of a disk, each of the parts being hinged to the other along one of its sides (4, 5), and the other sides (9, 10) of the parts being contained in a plane perpendicular to the hinge axis (8), the radial section (R, e) of the insert being substantially identical to the hollow inside section (L, e) of each length (11, 12).

2. A device according to claim 1, characterized in that the parts (2, 3) are identical, each of them being made up of at least two separate portions (20, 30) which are connected to each other at the moment when the two parts are hinged together.

3. A device according to claim 2, characterized in that one of the portions (20) of each part (2, 3) includes at least two hook-shaped tabs (21, 22) along its side (4) that is hinged to the other part, the hook-shaped tabs being open towards one of the faces (23) of the part, being spaced apart from one another along said side (4), and including, level with the gaps between the tabs (21, 22) at least one housing in said face (23) for receiving the other portion (30) that is likewise fitted with a hook-shaped tab (31), the opening of said hook-shape facing away from said face (23).

4. A device according to claim 3, characterized in that the openings of the hook-shaped tabs (21, 22, 31) of one of the parts are shaped to receive the ends of the hooks of the other part and have an inside profile (25, 32) that is identical to the profile of their outside surfaces (26, 33).

5. A device according to any one of claims 2 to 4, characterized in that the portions (20, 30) of a part (2) are held together by adhesive after their hooks have been engaged in the hooks of the other part (3).
